# EUROPÄISCHE PATENTSCHRIFT

(11) **EP 1 053 829 B1**
(45) Veröffentlichungstag und Bekanntmachung des Hinweises auf die Patenterteilung: **02.10.2002**
(21) Anmeldenummer: 00810378.0
(22) Anmeldetag: 03.05.2000
(51) Int. Cl.: B24B 55/05, B24B 27/08, B27B 9/02, B27G 19/04

(54) **Absaughaube für handgeführten Trennschleifer**
Suction hood for hand grinder
Capot d'aspiration pour meuleuse à main

(30) Priorität: 20.05.1999 DE 19923145
(43) Veröffentlichungstag der Anmeldung: 22.11.2000
(73) Patentinhaber: HILTI Aktiengesellschaft, 9494 Schaan (LI)
(72) Erfinder: Spangenberg, Rolf, 82131 Gauting (DE); Widmer, Louis, 9631 Ulisbach (CH)
(74) Vertreter: Wildi, Roland

(56) Entgegenhaltungen:
- EP-A- 0 340 467
- DE-U- 8 803 627
- DE-U- 29 604 780
- US-A- 5 433 008

## Beschreibung

Die Erfindung betrifft einen handgeführten Trennschleifer gemäss dem Oberbegriff des Patentanspruches 1.

Zur Herstellung von Nuten in harten Untergründen wie beispielsweise Beton oder Gestein ist aus der EP-0 340 467 ein handgeführter Trennschleifer mit einer Trennscheibe bekannt, die aus Sicherheitsgründen und zum Zwecke der Staubabfuhr in einem Haubenkörper und einem Führungskörper untergebracht ist. Der Trennschleifer und die Trennscheibe sind mit in Arbeitsposition horizontaler Achse an dem Haubenkörper angeordnet. Eine gemeinsame Drehachse verbindet den Haubenkörper und den Führungskörper. Der Haubenkörper ist um die Drechachse gegen die Kraft einer Feder in Richtung Führungskörper begrenzt verschwenkbar, bis der Haubenkörper an einem an dem Führungskörper angeordneten Anschlagelement zur Anlage gelangt. Dieses Anschlagelement ist in einer Freigabestellung entlang mehrerer an dem Führungskörper hintereinander angeordneten Rastungen begrenzt verschiebbar und mit der Kraft eines Federelementes in eine formschlüssig mit mehreren Rastungen zusammenwirkende Verriegelungsstellung versetzbar.

Damit das Anschlagelement von der Verriegelungsstellung in eine Freigabestellung versetzt werden kann, muss das Anschlagelement gegen die Kraft des Federelementes in der Weise versetzt werden, dass die formschlüssige Verbindung zwischen dem Anschlagelement und den zahnförmig ausgebildeten Rastungen aufgehoben wird. Insbesondere bei Federelementen mit einer geringen Federkraft besteht der Nachteil dieses bekannten Trennschleifers darin, dass es bei einer unbeabsichtigten Berührung des Anschlagelementes beim Aufsetzen des Trennschleifers auf einen zu bearbeitenden Untergrund oder beim Abheben von diesem Untergrund zu einer Verstellung des Anschlages kommen kann. Dies führt zu einer Abweichung von der voreingestellten Tiefe der Nut.

Der Erfindung liegt die Aufgabe zugrunde, einen handgeführten Trennschleifer zu schaffen, mit dem Nuten mit konstanter Tiefe hergestellt werden können und bei dem eine unbeabsichtigte Verstellung des Anschlagelementes nicht möglich ist.

Die Lösung dieser Aufgaben erfolgt mit einem handgeführten Trennschleifer, welcher die Merkmale des Patentanspruchs 1 aufweist.

Mit Hilfe des in den Wirkbereich des Anschlagelementes versetzbaren Sperrelementes wird verhindert, dass das Anschlagelement von einer Verriegelungsstellung in eine Freigabestellung versetzt wird. Es erfolgt somit eine Blockierung des Anschlagelementes. Bei diesem Sperrelement kann es sich beispielsweise um einen Bügel handeln, der seitlich neben dem Anschlagelement angeordnet ist und in der Verriegelungsstellung des Anschlagelementes unmittelbar hinter dem Anschlagelement in dessen Axialprojektion schwenkbar ist.

Eine leichte Versetzung des Anschlagelementes entlang der Rastungen wird ermöglicht indem vorzugsweise die Rastungen und das Anschlagelement an dem Haubenkörper angeordnet sind.

Die Baugrösse des Trennschleifers wird beispielsweise klein gehalten, indem vorzugsweise das Anschlagelement entlang eines sich an dem Haubenkörper abstützenden Bolzens geführt ist und dass das Sperrelement entlang des Bolzens gegenüber dem Anschlagelement relativ versetzbar sowie in einer Sperrstellung an dem Bolzen axial festlegbar ist.

Eine einfache und wirtschaftlich herstellbare Verbindung zwischen dem Sperrelement und dem Bolzen wird zweckmässigerweise dadurch erreicht, indem das Sperrelement über eine Gewindeverbindung mit dem Bolzen in Verbindung steht.

Vorteilhafterweise ist zwischen dem Sperrelement und dem Anschlagelement ein Federelement angeordnet ist, mit dessen Kraft das Anschlagelement in die Verriegelungsstellung versetzbar ist. Auf diese Weise erfolgt eine automatische Versetzung des Anschlagelementes in seine Verriegelungsstellung, sobald es in seiner Freigabestellung losgelassen wird. Die Kraft die für das Versetzen des Anschlagelementes in eine Freigabestellung notwendig ist, hängt ab von der Federkraft des Federelementes. Da sich das Federelement an dem Sperrelement abstützt, kann über die Distanz zwischen dem Sperrelement und dem Anschlagelement die auf das Anschlagelement wirkende Kraft der Feder beeinflusst werden. Ist beispielsweise ein grosser Abstand zwischen dem Sperrelement und dem Anschlagelement vorhanden, so wird das Federelement sehr stark entlastet und das Anschlagelement lässt sich mit einer geringen Kraft in eine Freigabestellung versetzen. Ist der Abstand zwischen dem Sperrelement und dem Anschlagelement klein, so ist die Kraft die zum Versetzen des Anschlagelementes in seine Freigabestellung benötigt wird grösser.

Um eine gute Führung des Federelementes zu erreichen und eine Verschmutzung desselben verhindern zu können, ist zweckmässigerweise das Federelement wenigstens teilweise in einer zum Sperrelement hin offen ausgebildeten Ringnut angeordnet.

Der Haubenkörper und der Führungskörper sind über eine gemeinsame Drehachse schwenkbar miteinander verbunden. Damit sich diese beiden Körper nur ineinander schwenken lassen und nicht auseinandergeschwenkt werden können, steht vorteilhafterweise der Bolzen mit einer an dem Haubenkörper angeordneten elastischen Rastfeder in Verbindung, die in einer Ausgangsstellung des Haubenkörpers formschlüssig mit dem Führungskörper zusammenwirkt und sich in einer Arbeitsstellung des Haubenkörpers an einer Innenkontur des Führungskörpers abstützt.

Die Rastfeder ist beispielsweise an der Innenseite des Haubenkörpers angeordnet. Damit die Rastfeder mit dem Führungskörper zusammenwirken kann, überragt vorteilhafterweise die Rastfeder in der Ausgangsstellung des Haubenkörpers die Aussenkontur des Haubenkörpers und ragt mit einer Rastnase in eine an der Innenseite des Führungskörpers angeordnete Vertiefung.

Zum Auswechseln der in dem Haubenkörper und dem Führungskörper angeordneten Trennscheibe muss diese beispielsweise mit einem geeigneten Werkzeug schnell und gut zugänglich sein. Zu diesem Zweck ist vorzugsweise durch eine axiale Versetzung des Bolzens die formschlüssige Verbindung zwischen der Rastfeder und dem Führungskörper lösbar. Dadurch können der Haubenkörper und der Führungskörper auseinander bewegt werden, indem der Führungskörper um die gemeinsame Drehachse von dem Haubenkörper weggeschwenkt wird.

Zweckmässigerweise weist der Führungskörper ein Fenster in Form einer Durchtrittsöffnung auf, das im Umfangsbereich der Trennscheibe angeordnet ist. Dieses Fenster ermöglicht ein frühzeitiges Erkennen der Abnützung oder des sogenannten "Feuerns" der Trennscheibe.

Koaxial zur gemeinsamen Drehachse von Haubenkörper und Führungskörper sind zwei Führungsrollen angeordnet, die zusammen mit einer an dem Führungskörper angeordneten, von dem Haubenkörper abgewandten Führungsfläche der Führung des Trennschleifers auf einer Oberfläche eines zu bearbeitenden Untergrundes dient. Die Führungsrollen überragen beispielsweise die Führungsfläche um ungefähr 1 mm.

An einem von dem Führungskörper abgewandten, oberen Teil des Haubenkörpers, ist ein Absaugstutzen in der Weise angeordnet, dass eine direkte Absaugung von anfallendem Schleifstaub mit Hilfe eines Sauggerätes möglich ist. Der Absaugstutzen ist beispielsweise von dem Haubenkörper abnehmbar bzw. gegen einen anderen Absaugstutzen austauschbar, so dass ein anderes Absauggerät an den Trennschleifer angeschlossen werden kann.

Auf zwei einander gegenüberliegenden Seiten des Haubenkörpers sind zwei Anschlussgewinde angeordnet, die der Aufnahme eines Seitenhandgriffes dienen. Die beiden Gewinde sind beispielsweise koaxial zueinander angeordnet. Die Längsachsen der Gewinde erstrecken sich parallel zur Achse der Trennscheibe.

Die Erfindung wird anhand von Zeichnungen, die ein Ausführungsbeispiel wiedergeben, näher erläutert. Es zeigen:
- Fig.1: einen erfindungsgemässen, handgeführten Trennschleifer mit einem Führungskörper und einem Haubenkörper, in der Ausgangsstellung;
- Fig. 2: den Trennschleifer gemäss Fig. 1 mit einem geöffneten Führungskörper;
- Fig. 3: einen Ausschnitt des Haubenkörpers und des Führungskörpers, gemäss Fig. 1, in vergrösserter und geschnittener Darstellung;
- Fig. 4: einen Schnitt durch den Haubenkörper entlang der Linie IV-IV in Fig. 3, in vergrösserter und geschnittener Darstellung.

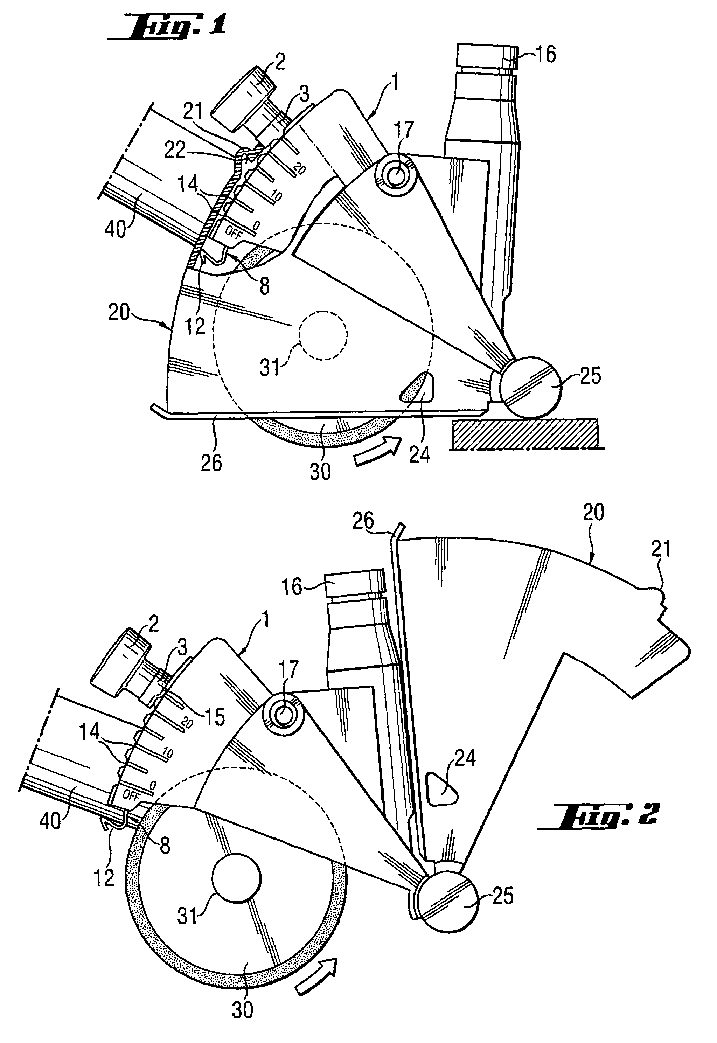

Die Fig. 1 und 2 zeigen einen handgeführten Trennschleifer, dessen Gehäuse 40 allerdings nicht zur Gänze dargestellt ist. Aus diesem Gehäuse 40 ragt eine nicht näher dargestellte Antriebswelle, auf der ein Werkzeug in Form einer Trennscheibe 30 mittels einer Spanneinrichtung 31 befestigt ist. Diese Antriebswelle erstreckt sich senkrecht zur Längserstreckung des Gehäuses 40 und die Trennscheibenebene verläuft senkrecht zu einer Oberfläche eines zu bearbeitenden, nicht dargestellten Untergrundes.

Innerhalb des Gehäuses 40 befindet sich beispielsweise ein ebenfalls nicht näher dargestellter, elektrischer Antriebsmotor, mit dem die Antriebswelle und somit die Trennscheibe 30 antreibbar ist. An einem nicht näher dargestellten Flansch, der ebenfalls mit dem Gehäuse 40 in Verbindung steht, ist ein Haubenkörper 1 befestigt, der die Trennscheibe 30 teilweise abdeckt.
Der Haubenkörper 1 ist mit einer Drehachse versehen, die parallel zur Antriebswelle bzw. zur Achse der Trennscheibe 30 verläuft. An dieser Drehachse ist auch ein Führungskörper 20 befestigt, der ebenfalls der teilweisen Abdeckung der Trennscheibe 30 dient. Sowohl der Haubenkörper 1 als auch der Führungskörper 20 sind im wesentlichen kreisausschnittartig ausgebildet, wobei der Haubenkörper 1 ausgehend von einer Ausgangsstellung gegen die Kraft einer nicht gezeigten Feder um die Drehachse herum teleskopartig in den Führungskörper 20 in eine Arbeitsstellung schwenkbar ist, in der die Trennscheibe 30 eine Führungsfläche 26 des Führungskörpers überragt. Diese Führungsfläche 26 befindet sich an einem dem Haubenkörper 1 abgewandten Endbereich des Führungskörpers 20.

Auf beiden Seiten der Drehachse ist jeweils eine Führungsrolle 25 angeordnet, die zusammen mit der Führungsfläche 26 der Führung des Trennschleifers auf der Oberfläche des Untergrundes dient. Damit auf einer ebenen Oberfläche nicht die gesamte Führungsfläche 26 zur Gänze aufliegt, überragt die Aussenkontur der Führungsrollen 25 die Führungsfläche um beispielsweise 0,5 bis 1 mm.

Im Bereich der Drehachse und der Führungsfläche 26 weist der Führungskörper 20 seitlich ein Fenster 24 in Form einer Durchtrittsöffnung auf, durch das ein frühzeitiges Erkennen der Trennscheibenabnützung oder ein sogenanntes "Feuern" der Trennscheibe 30 möglich ist.

Dieser Haubenkörper 1 weist zwei einander gegenüberliegende Anschlussgewinde 17 auf, deren Längsachse parallel zur Antriebswelle des Trennschleifers verlaufen und die der Aufnahme eines nicht dargestellten Seitenhandgriffes dienen. Im Umgebungsbereich dieser Anschlussgewinde 17 ist der Haubenkörper 1 mit einem Absaugstutzen 16 versehen, an den beispielsweise eine nicht dargestellte Absaugeinrichtung anschliessbar ist.

Wie insbesondere den Fig. 1 bis 4 entnehmbar ist, weist die bogenförmige Aussenkontur des Haubenkörpers 1 mehrere Rastungen 14 auf, die in Richtung Führungskörper 20 im Abstand voneinander sowie hintereinander angeordnet sind. Diese Rastungen 14 sind in Form von Vertiefungen ausgebildet, in die beispielsweise zwei einander gegenüberliegende Vorsprünge 15 eines Anschlagelementes 3 einrückbar sind. Seitlich neben den Rastungen 14 ist an dem Haubenkörper 1 eine Skala angeordnet, mit deren Hilfe eine Bedienungsperson das Anschlagelement 3 auf die gewünschte Nuttiefe einstellen kann.

Dieses Anschlagelement 3 ist wie die Fig. 4 zeigt, hülsenförmig ausgebildet und wird entlang eines Bolzens 4 geführt, der über eine Gewindeverbindung 5 mit einem Sperrelement 2 in Form eines Knaufes in Verbindung steht. Das Anschlagelement 3 stützt sich über ein Federelement 6 an dem Sperrelement 2 ab. Dieses Federelement 6 ist zum Teil in einer zum Sperrelement 2 hin offen ausgebildeten Ringnut 18 des Anschlagelementes 3 angeordnet.

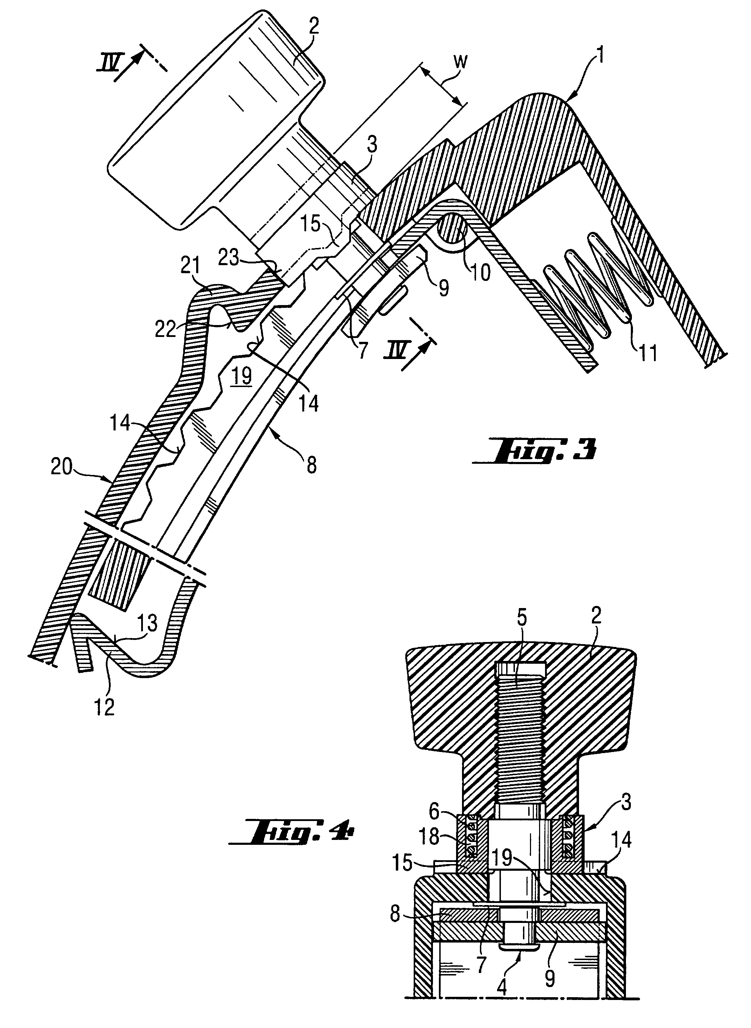

Aus der Fig. 3 ist erkennbar, dass sich das Anschlagelement 3 in einer Verriegelungsstellung befindet und das Sperrelement 2 mit einem dem Anschlagelement 3 zugewandten Endbereich in den Wirkbereich W des Anschlagelementes 3 ragt. Eine Versetzung des Anschlagelementes 3 in eine Freigabestellung, in der die Vorsprünge 15 nicht mehr in die Rastungen 14 ragen, ist nur möglich, wenn das Sperrelement 2 aus dem Wirkbereich W des Anschlagelementes 3 versetzt und das Anschlagelement 3 gegen die Kraft des Federelementes 6 in Richtung Sperrelement 2 verschoben wird.

Der das Anschlagelement 3 und das Sperrelement 2 tragende Bolzen 4 durchsetzt ein in dem Haubenkörper 1 angeordnetes Langloch 19, das sich in Richtung Führungskörper 20 erstreckt. Entlang dieses Langloches 19 ist der Bolzen 4 und somit das Anschlagelement 3 versetzbar, sofern sich das Anschlagelement 3 in einer Freigabestellung befindet. Von der Lage des Anschlagelementes 3 an dem Haubenkörper 1 hängt die Nutentiefe ab, da sich der Führungskörper 20 mit seiner Anschlagfläche 23 am Anschlagelement 3 abstützt.

Damit der Haubenkörper 1 nur in den Führungskörper 20 geschwenkt werden kann und ein Auseinanderschwenken des Führungskörpers 20 und des Haubenkörpers 1 verhindert wird, steht beispielsweise der Bolzen 4 mit einer an dem Haubenkörper 1 angeordneten elastischen Rastfeder 8 in Verbindung, die in einer Ausgangsstellung des Haubenkörpers 1 formschlüssig mit dem Führungskörper 20 zusammenwirkt und sich in einer Arbeitsstellung des Haubenkörpers 1 an einer Innenkontur des Führungskörpers 20 abstützt.

Die Rastfeder 8 ist beispielsweise mit Hilfe der Halterung 10 an der Innenseite des Haubenkörpers 1 angeordnet. Damit diese Rastfeder 8 mit dem Führungskörper 20 zusammenwirken kann, überragt vorteilhafterweise die Rastfeder 8 mittels der Feder 11 in der Ausgangsstellung des Haubenkörpers 1 die Aussenkontur des Haubenkörpers 1 und ragt mit einer Rastnase 12 und deren Anschlagfläche 13 in eine an der Innenseite des Führungskörpers 20 angeordnete Vertiefung 21 und stützt sich an deren Anschlagfläche 22 ab.

Zum Auswechseln der in dem Haubenkörper 1 und dem Führungskörper 20 angeordneten Trennscheibe 30 muss diese beispielsweise mit einem geeigneten Werkzeug schnell und gut zugänglich sein. Zu diesem Zweck ist beispielsweise durch eine axiale Versetzung des Bolzens 4, der durch den Sicherungsring 7 und das Endstück 9 mit der Rastfeder 8 verbunden ist, die formschlüssige Verbindung zwischen der Rastfeder 8 und dem Führungskörper 20 lösbar. Dadurch können der Haubenkörper 1 und der Führungskörper 20 auseinander bewegt werden, indem der Führungskörper 20 um die gemeinsame Drehachse von dem Haubenkörper 1 weggeschwenkt wird.

## Patentansprüche

1. Handgeführter Trennschleifer mit einer Trennscheibe (30) und einer Drehachse, die einen Führungskörper (20) und einen Haubenkörper (1) miteinander verbindet, wobei der Trennschleifer mit der Trennscheibe (30) mit in Arbeitsposition horizontaler Achse an dem Haubenkörper (1) angeordnet sind, der um die Drehachse gegen die Kraft einer Feder in Richtung Führungskörper (20) begrenzt schwenkbar ist, bis einer der beiden Körper (1, 20) an einem Anschlagelement (3) zur Anlage gelangt, das in einer Freigabestellung entlang mehrerer an einem der beiden Körper (1, 20) hintereinander angeordneten Rastungen (14) begrenzt verschiebbar und in eine formschlüssig mit wenigstens einer Rastung (14) zusammenwirkende Verriegelungsstellung versetzbar ist, **dadurch gekennzeichnet, dass** ein Sperrelement (2) vorgesehen ist, das in der Verriegelungsstellung des Anschlagelementes (3) in den Wirkbereich (W) des Anschlagelementes (3) versetzbar ist.

2. Trennschleifer nach Anspruch 1, **dadurch gekennzeichnet, dass** die Rastungen (14) und das Anschlagelement (3) an dem Haubenkörper (1) angeordnet sind.

3. Trennschleifer nach Anspruch 1 oder 2, **dadurch gekennzeichnet, dass** das Anschlagelement (2) entlang eines sich an dem Haubenkörper (1) abstützenden Bolzens (4) geführt ist und dass das Sperrelement (2) entlang des Bolzens (4) gegenüber dem Anschlagelement (3) relativ versetzbar sowie in einer Sperrstellung an dem Bolzen (4) axial festlegbar ist.

4. Trennschleifer nach einem der Ansprüche 1 bis 3, **dadurch gekennzeichnet, dass** das Sperrelement (2) über eine Gewindeverbindung (5) mit dem Bolzen (4) in Verbindung steht.

5. Trennschleifer nach einem der Ansprüche 1 bis 4 **dadurch gekennzeichnet, dass** zwischen dem Sperrelement (2) und dem Anschlagelement (3) ein Federelement (6) angeordnet ist, mit dessen Kraft das Anschlagelement (3) in die Verriegelungsstellung versetzbar ist.

6. Trennschleifer nach Anspruch 5, **dadurch gekennzeichnet, dass** das Federelement (6) wenigstens teilweise in einer zum Sperrelement (2) hin offen ausgebildeten Ringnut (18) angeordnet ist.

7. Trennschleifer nach Anspruch 3 oder 4, **dadurch gekennzeichnet, dass** der Bolzen (4) mit einer an dem Haubenkörper (1) angeordneten elastischen Rastfeder (8) in Verbindung steht, die in einer Ausgangsstellung des Haubenkörpers (1) formschlüssig mit dem Führungskörper (20) zusammenwirkt und sich in einer Arbeitsstellung des Haubenkörpers (1) an einer Innenkontur des Führungskörpers (20) abstützt.

8. Trennschleifer nach Anspruch 7, **dadurch gekennzeichnet, dass** die Rastfeder (8) in der Ausgangsstellung des Haubenkörpers (1) die Aussenkontur des Haubenkörpers (1) überragt und mit einer Rastnase (12) in eine an der Innenseite des Führungskörpers (20) angeordnete Vertiefung (21) ragt.

9. Trennschleifer nach Anspruch 8, **dadurch gekennzeichnet, dass** durch eine axiale Versetzung des Bolzens (4) die formschlüssige Verbindung zwischen der Rastfeder (8) und dem Führungskörper (20) lösbar ist.

10. Trennschleifer nach einem der Ansprüche 1 bis 9, **dadurch gekennzeichnet, dass** der Führungskörper (20) ein Fenster (24) in Form einer Durchtrittsöffnung aufweist, das im Umfangsbereich der Trennscheibe (30) angeordnet ist.

## Claims

1. A hand-operated grinder with a grinding wheel (30) and an axis of rotation which connects a operating body (20) and a hood body (1), the grinder with the grinding wheel (30) being arranged on the hood body (1) with the axis disposed horizontally in the working position, said hood body (1) being pivotable towards the operating body (20) within limits about the axis of rotation until one of the two bodies (1, 20) abuts against a stop element (3) which in a released position is displaceable within limits along a plurality of latching detents (14) arranged successively on the one of the two bodies (1, 20) and is movable into a locked position co-operating by a positive fit with at least one latching detent (14), **characterised in that** a locking element (2) which in the locked position of the stop element (3) is movable into the operating range (W) of the stop element (3) is provided.

2. A grinder according to Claim 1, **characterised in that** the latching detents (14) and the stop element (3) are arranged on the hood body (1).

3. A grinder according to Claim 1 or 2, **characterised in that** the stop element (3) is guided along a pin (4) supported on the hood body (1) and **in that** the locking element (2) is relatively displaceable with respect to the stop element (3) along the pin (4) and is axially fixable on the pin (4) in a locked position.

4. A grinder according to one of the claims 1 to 3, **characterised in that** the locking element (2) is connected to the pin (4) by means of a screw thread connection (5).

5. A grinder according to one of the claims 1 to 4, **characterised in that** a spring element (6) is arranged between the locking element (2) and the stop element (3), by the force of which spring element (6) the stop element (3) is displaceable into the locked position

6. A grinder according to Claim 5, **characterised in that** the spring element (6) is arranged at least partially in an annular groove (18) which is open towards the locking element (2).

7. A grinder according to Claim 3 or 4, **characterised in that** the pin (4) is connected to an elastic latching spring (8) arranged on the hood body (1), which latching spring (8) co-operates by a positive fit with the operating body (20) in a starting position of the hood body (1) and rests against an inner contour of the operating body (20) in a working position of the hood body (1).

8. A grinder according to Claim 7, **characterised in that** in the starting position of the hood body (1) the latching spring (8) protrudes beyond the outer contour of the hood body (1) and projects with a latching dog (12) into a recess (21) arranged on the inner face of the operating body (20).

9. A grinder according to Claim 8, **characterised in that** the connection by positive fit between the latching spring (8) and the operating body (20) is releasable by an axial displacement of the pin (4).

10. A grinder according to one of the claims 1 to 9, **characterised in that** the operating body (20) has a window (24) in the form of a through-aperture which is arranged in the area of the circumference of the cutting wheel (30).

## Revendications

1. Tronçonneuse à meule à guidage manuel, comprenant un disque de tronçonnage (30) et un axe de rotation qui relie entre eux un corps de guidage (20) et un corps de capot (1), la tronçonneuse à meule avec le disque de tronçonnage (30) étant disposée avec l'axe horizontal en position de travail sur le corps de capot (1) qui peut pivoter de manière limitée autour de l'axe de rotation à l'encontre de la force d'un ressort en direction du corps de guidage (20) jusqu'à ce qu'un des deux corps (1, 20) vienne en butée contre un élément de butée (3) qui, dans une position libérée, peut coulisser de manière limitée le long de plusieurs crans (14) disposés les uns derrière les autres sur un des deux corps (1, 20) et peut être amené dans une position verrouillée coopérant par complémentarité de formes avec au moins un cran (14), **caractérisée en ce qu'**il est prévu un élément de blocage (2) qui, dans la position verrouillée de l'élément de butée (3), peut être amené dans la zone d'action (W) de l'élément de butée (3).

2. Tronçonneuse à meule selon la revendication 1, **caractérisée en ce que** les crans (14) et l'élément de butée (3) sont disposés sur le corps de capot (1).

3. Tronçonneuse à meule selon la revendication 1 ou 2, **caractérisée en ce que** l'élément de butée (2) est guidé le long d'un goujon (4) prenant appui sur le corps de capot (1), et **en ce que** l'élément de blocage (2) est mobile le long du goujon (4) par rapport à l'élément de butée (3) et peut être immobilisé axialement dans une position bloquée sur le goujon (4).

4. Tronçonneuse à meule selon une des revendications 1 à 3, **caractérisée en ce que** l'élément de blocage (2) est relié au goujon (4) par l'intermédiaire d'une liaison filetée (5).

5. Tronçonneuse à meule selon une des revendications 1 à 4, **caractérisée en ce qu'**entre l'élément de blocage (2) et l'élément de butée (3) est disposé un élément élastique (6), avec la force duquel l'élément de butée (3) peut être amené dans la position verrouillée.

6. Tronçonneuse à meule selon la revendication 5, **caractérisée en ce que** l'élément élastique (6) est disposé au moins partiellement dans une gorge annulaire (18) ménagée de façon ouverte vers l'élément de blocage (2).

7. Tronçonneuse à meule selon la revendication 3 ou 4, **caractérisée en ce que** le goujon (4) est relié à un ressort d'encliquetage élastique (8) qui est disposé contre le corps de capot (1) et qui, dans une position initiale du corps de capot (1), coopère par complémentarité de formes avec le corps de guidage (20) et, dans une position de travail du corps de capot (1), prend appui sur un contour intérieur du corps de guidage (20).

8. Tronçonneuse à meule selon la revendication 7, **caractérisée en ce que**, dans la position initiale du corps de capot (1), le ressort de crantage (8) dépasse du contour extérieur du corps de capot (1) et, par l'intermédiaire d'un talon d'encliquetage (12), pénètre dans un renfoncement (21) ménagé dans la face intérieure du corps de guidage (20).

9. Tronçonneuse à meule selon la revendication 8, **caractérisée en ce que** la liaison par complémentarité de formes entre le ressort de crantage (8) et le corps de guidage (20) peut être annulée par un déplacement axial du goujon (4).

10. Tronçonneuse à meule selon une des revendications 1 à 9, **caractérisée en ce que** le corps de guidage (20) est pourvu d'une fenêtre (24) en forme d'orifice traversant qui est ménagée dans la zone circonférentielle du disque de tronçonnage (30).
